# EUROPÄISCHE PATENTSCHRIFT

(11) **EP 2 301 329 B1**
(45) Veröffentlichungstag und Bekanntmachung des Hinweises auf die Patenterteilung: **20.11.2013**
(21) Anmeldenummer: 10008640.4
(22) Anmeldetag: 19.08.2010
(51) Int. Cl.: A01K 7/04

(54) **Tränktrog**
Watering trough
Abreuvoir

(30) Priorität: 24.09.2009 DE 102009042848
(43) Veröffentlichungstag der Anmeldung: 30.03.2011
(73) Patentinhaber: Suevia Haiges GmbH, 74366 Kirchheim/Neckar (DE)
(72) Erfinder: Haiges, Frank, 74366 Kirchheim/Neckar (DE)
(74) Vertreter: Bartels & Partner

(56) Entgegenhaltungen:
- US-A- 1 506 336
- US-A- 1 738 303
- US-A- 3 948 221

## Beschreibung

Die Erfindung betrifft einen Tränktrog umfassend einen wasseraufnehmenden Behälter, zu schützende Behälterkomponenten, wie eine Wassereinlaufeinrichtung, eine Abdeckeinrichtung, die zwischen einer geöffneten und einer geschlossenen, die zu schützenden Behälterkomponenten nach außen abdeckenden, Position bewegbar ist, und eine Blockiereinrichtung, die in der geschlossenen Position eine Bewegung der Abdeckeinrichtung verhindert und dabei zumindest teilweise durch die Abdeckeinrichtung abgedeckt ist, wobei die Blockiereinrichtung mindestens einen ersten am Behälter feststehend angeordneten Teil sowie einen zweiten mit dem ersten Teil kooperierenden und gegenüber diesem in seiner Lage veränderlichen Teil, welcher an der Abdeckeinrichtung beweglich angeordnet ist, aufweist, wobei der erste Teil eine Ausnehmung aufweist, in die in der geschlossenen Position der Abdeckeinrichtung ein korrespondierender Eingreifkörper des zweiten Teils derart in Eingriff bringbar ist, dass eine Bewegung der Abdekkeinrichtung in die geöffnete Position verhindert ist.

Dadurch dass in der geschlossenen Position eine Bewegung der Abdeckeinrichtung mittels einer Blockiereinrichtung verhinderbar ist, sind die zu schützenden Behälterkomponenten vor Beschädigungen durch Tiere des Viehbestands, die zu einem Deblockieren der Blockiereinrichtung nicht in der Lage sind, wirksam geschützt. Dadurch dass in der geschlossenen Position der Abdeckeinrichtung die Blockiereinrichtung zumindest teilweise durch die Abdeckeinrichtung abgedeckt ist, stellt der abgedeckte Teil der Blockiereinrichtung zum einen keinen Anreiz für den Spieltrieb von Tieren des Viehbestands dar, zum anderen ist der abgedeckte Teil der Blockiereinrichtung ebenfalls vor Beschädigungen durch die Tiere geschützt.

Tränktröge kommen insbesondere in der Viehwirtschaft zum Tränken eines Viehbestands beispielsweise von Schweinen, Rindern, Pferden, Schafen und dergleichen zum Einsatz. Durch eine Wassereinlaufeinrichtung wird hierbei die Zufuhr von frischem Wasser für die Versorgung des Viehbestands gewährleistet. Die US 3,841,268 offenbart einen Tränktrog mit einem wannenförmigen Behälter für Wasser und mit einer ein Einlaufventil aufweisenden Wassereinlaufeinrichtung, wobei das Einlaufventil durch eine geeignete Abdeckeinrichtung abdeckbar ist. Hierdurch sollen Tiere von einer Beschädigung des Einlaufventils abgehalten werden.

Ein Tränktrog der eingangs genannten Art ist aus US 3,948,221 bekannt. Bei dem bekannten Tränktrog ist eine Abdeckeinrichtung vergleichbar einem Deckel vorgesehen, welche mit ihrem Rand in eine am Behälter vorgesehene entsprechende Einfassung eingesetzt wird und dort über Eingriff eines an der Abdeckeinrichtung befestigten Stifts in eine entsprechende Ausnehmung am Behälter verriegelt wird. Die Verriegelung wird durch einen durch seitliche Handöffnungen in der Abdeckeinrichtung greif- und betätigbaren Entriegelungsmechanismus vorgesehen. Neben einem mitunter komplizierten Aufbau ist hier ein mechanischen Beanspruchungen und Witterungseinflüssen ausgesetzter Entriegelungsmechanismus zwingend auszubilden.

Eine Abdeckeinrichtung, welche fest mit dem Tränktrog verbunden ist, stellt zwar einen wirksamen Schutz für damit geschützte Behälterkomponenten dar, jedoch ist die Handhabung derartiger Tränktröge umständlich, da für Reinigungsmaßnahmen am Tränktrog oder Einstell- bzw. Servicearbeiten an den geschützten Behälterkomponenten eine derart mit dem Tränktrog fest verbundene Abdeckeinrichtung jeweils zunächst entfernt und nach Durchführung der entsprechenden Arbeiten wieder angebracht werden muss. Abgesehen von den hiermit verbundenen Kosten müsste für diese Arbeiten auch jeweils das notwendige Werkzeug gegebenenfalls in entfernt liegende Weidegebiete mitgeführt werden.

Ausgehend von dem genannten Stand der Technik liegt der Erfindung die Aufgabe zugrunde, einen Tränktrog bereitzustellen, bei dem zu schützende Behälterkomponenten mit einer Abdeckeinrichtung abdeckbar sind und bei dem die Handhabung der Abdeckeinrichtung für hierzu autorisierte Personen in einfacher Weise und kostengünstig möglich ist, während gleichzeitig ein wirksamer Schutz der zu schützenden Behälterkomponenten vor Beschädigungen durch Tiere des Viehbestands gewährleistet ist.

Eine dahingehende Aufgabe löst ein Tränktrog mit den Merkmalen des Patentanspruches 1 in seiner Gesamtheit.

Dadurch, dass die Abdeckeinrichtung durch eine Schwenkbewegung in Bezug auf den Behälter zwischen einer geöffneten und einer geschlossenen, die zu schützenden Behälterkomponente nach außen abdeckenden, Position bewegbar ist, ist eine einfache Handhabung der Abdeckeinrichtung bei deren Öffnen und Schließen gewährleistet. Servicearbeiten an den durch die Abdeckeinrichtung geschützten Behälterkomponenten oder auch beispielsweise das Reinigen des Tränktrogs sind nach dem Schwenken der Abdeckeinrichtung in ihre geöffnete Position, was nur mit einem geringen Zeitaufwand verbunden ist, unmittelbar durchführbar. Bei der Aufstellung erfindungsgemäßer Tränktröge im Außenbereich sind die durch die Abdeckeinrichtung abgedeckten Behälterkomponenten auch weitgehend gegen Witterungseinflüsse, Schmutzeintrag und ganz allgemein gegen mutwillige Beschädigung geschützt. Eine schwenkbare Abdeckeinrichtung stellt für das Servicepersonal auch eine wesentliche Vereinfachung ihrer Tätigkeit dar, da durch eine einfache Schwenkbewegung die Abdeckeinrichtung in die geöffnete Position bewegbar ist, aber auch in dieser Position an dem Behälter verbleiben kann, so dass hier keine geeignete Ablagestelle für die Abdeckeinrichtung zu suchen ist. Dies ist insbesondere beim Einsatz im Außenbereich von Interesse, da hierdurch die Abdeckeinrichtung beispielsweise nicht einfach auf dem Boden abgestellt wird, wodurch zunächst eine Anlagerung von Schmutz an der Abdeckeinrichtung erfolgen könnte, der nach deren erneuten Montage am Tränktrog mit in den Behälter einlaufendem Wasser von der Abdeckeinrichtung abgespült und so in das den Tieren zur Verfügung stehende Wasser hineingespült werden könnte.

Erfindungsgemäß weist der Eingreifkörper ein Betätigungsorgan zur Veränderung der Lage des Eingreifkörpers auf, das sowohl in der offenen als auch in der geschlossenen Position der Abdeckeinrichtung von außen zugänglich eine werkzeuglose Betätigung der Blockiereinrichtung ermöglicht. Das Bereitstellen eines Betätigungsorgans zur Veränderung der Lage des Eingreifkörpers an der Blockiereinrichtung selbst birgt den Vorteil, dass hier für die Betätigung der Blockiereinrichtung keine gegebenenfalls mitzuführenden Werkzeuge notwendig sind. Dadurch dass das Betätigungsorgan von außen zugänglich ist und zwar sowohl in der offenen als auch in der geschlossenen Position der Abdeckeinrichtung ist ein unmittelbarer Zugang von Servicepersonal zu dem Betätigungsorgan gegeben, so dass eine zügige Betätigung der Blockiereinrichtung ermöglicht ist.

Erfindungsgemäß sind in der geschlossenen Position alle Teile der Blokkiereinrichtung, außer das Betätigungsorgan, durch die Abdeckeinrichtung abgedeckt. Dergestalt sind neben den zu schützenden Behälterkomponenten auch der größte Teil der Bestandteile der Blockiereinrichtung durch die Abdeckeinrichtung in geschlossener Position geschützt. Insbesondere bei einem weitgehend unauffälligen Betätigungsorgan ist es hierdurch für nicht autorisierte Personen nicht ohne Weiteres erkennbar, dass an einem erfindungsgemäßen Tränktrog die Abdeckeinrichtung mit einer Blockiereinrichtung versehen ist. Darüber hinaus ist auch die Funktionsweise der Blokkiereinrichtung für nicht autorisierte Personen bei geschlossener Abdeckeinrichtung nicht in einfacher Weise erkennbar. So sind neben einem Schutz der zu schützenden Behälterkomponenten und der meisten Teile der Blockiereinrichtung vor dem Spieltrieb von Tieren des Viehbestands, diese Komponenten auch vor Beschädigungen durch nicht autorisierte Personen geschützt.

Die zweiteilige Ausführung der Blockiereinrichtung, insbesondere sofern die mindestens zwei Teile der Blockiereinrichtung nicht jeweils einstückig von dem Behälter oder der Abdeckeinrichtung ausgebildet sind, weist zum einen den Vorteil auf, dass eine derartige Blockiereinrichtung auch nachträglich an bereits bestehende Tränktröge montierbar ist, des Weiteren können dergestalt für die Blockiereinrichtung auch engere Fertigungstoleranzen vorgesehen werden als für andere, insbesondere großflächige Komponenten des Tränktrogs. Dadurch dass der zweite Teil gegenüber dem ersten Teil in seiner Lage veränderlich ist, kann die Blockiereinrichtung in mehrere durch die relative Lage der beiden Teile bestimmte Zustände versetzt werden.

Der erste Teil weist eine Ausnehmung auf, in die in der geschlossenen Position der Abdeckeinrichtung ein korrespondierender Eingreifkörper des zweiten Teils derart in Eingriff bringbar ist, dass eine Bewegung der Abdekkeinrichtung in die geöffnete Position verhindert ist. Die dahingehende Ausnehmung kann im ersten Teil der Blockiereinrichtung beispielsweise als Sackloch oder auch als Durchgangsloch ausgebildet sein, sie kann aber auch als eine den Randbereich des ersten Teils zumindest teilweise durchgreifende Nut, beispielsweise rechteckförmigen oder U-förmigen Querschnitts ausgebildet sein. Damit der Eingreifkörper mit der Ausnehmung kooperieren kann, ist hierbei die Innenkontur der Ausnehmung in Abhängigkeit von der Außenkontur des Eingreifkörpers entsprechend zu gestalten. In einfachster Weise erfolgt eine Verhinderung der Bewegung der Abdeckeinrichtung in die geöffnete Position, indem beim Versuch des Einleitens einer Schwenkbewegung der Abdeckeinrichtung der sich im Eingriff befindliche Eingreifkörper des zweiten Teils in Anlage an eine Innenkontur der Ausnehmung des ersten Teils bewegt wird und sich über diesen Punkt hinaus nicht weiterbewegen kann, so dass eine Schwenkbewegung der Abdekkeinrichtung bezüglich des Behälters wirksam verhindert ist.

Vorteilhafte Ausgestaltungen des erfindungsgemäßen Tränktrogs sind Gegenstände der Unteransprüche.

Bei einer Ausführungsform des erfindungsgemäßen Tränktrogs ist der Eingreifkörper der Blockiereinrichtung durch eine Hubbewegung in Richtung seiner Längserstreckung in seiner Lage veränderlich und in der geschlossenen Position der Abdeckeinrichtung ist der Eingreifkörper zum Eingreifen in die Ausnehmung verfahrbar und zum Deblockieren der Blockiereinrichtung in die entgegengesetzte Richtung aus der Ausnehmung herausfahrbar. Eine Hubbewegung des Eingreifkörpers stellt eine zum einen kostengünstig realisierbare und zum zweiten auch von der Handhabung her mit sehr geringem Aufwand verbundene Möglichkeit dar, um die Blockiereinrichtung von einem blockierenden in einen deblockierten Zustand zu versetzen. Auch ist eine durch Hubbewegung bewirkte Betätigung der Blockiereinrichtung intuitiv, indem dem das Hineinfahren des Eingreifkörpers in die Ausnehmung zum Erreichen des blockierten Zustandes das Herausfahren des Eingreifkörpers in die entgegengesetzte Richtung zum Deblockieren der Blockiereinrichtung in logischer Weise gegenübersteht.

Bei einer Ausführungsform des erfindungsgemäßen Tränktrogs durchgreift der Eingreifkörper eine korrespondierende Durchgangsöffnung in der Abdeckeinrichtung mit Spiel, so dass ein hemmnisarmes Bewegen des Ein-greifkörpers relativ zur Abdeckeinrichtung gewährleistet ist. Dergestalt ist die Hubbewegung des Eingreifkörpers in Richtung seiner Längserstreckung und relativ zur Abdeckeinrichtung ermöglicht. Zur Führung des Eingreifkörpers kann in einer weiteren Ausführungsform des erfindungsgemäßen Tränktrogs vorgesehen sein, dass auf der Innen- und/oder Außenseite der die Durchgangsöffnung umrandenden Fläche der Abdeckeinrichtung und koaxial zur Durchgangsöffnung ein der Außenkontur des Eingreifkörpers angepasst ausgestaltetes Führungselement zum Führen des Eingreifkörpers vorgesehen ist. Das dahingehende Führungselement kann beispielsweise in Form eines koaxial zur Durchgangsöffnung angeordneten zylindrischen Hohlkörpers ausgebildet sein, der zumindest von einem Abschnitt des Eingreifkörpers durchgreifbar ist.

Bei einer Ausführungsform des erfindungsgemäßen Tränktrogs ist der Eingreifkörper in seiner Bewegbarkeit bezüglich der Abdeckeinrichtung durch eine Hubbegrenzungseinrichtung eingeschränkt und durch diese auch verliersicher an der Abdeckeinrichtung gelagert. Die dahingehende Einschränkung der Bewegbarkeit des Eingreifkörpers kann sinnvollerweise so gewählt sein, dass eine zuverlässige Betätigung der Blockiereinrichtung gewährleistet ist, aber gleichzeitig eine darüber hinausgehende Bewegung des Eingreifkörpers verhindert ist. Dergestalt kann sich das Servicepersonal bei der Betätigung der Blockiereinrichtung und Erreichen der durch die Hubbegrenzungseinrichtung vorgegebenen Schranken der Bewegung jeweils sicher sein, den Eingreifkörper in die für den gewünschten Zustand der Blokkiereinrichtung notwendige Lage gebracht zu haben. Dadurch, dass die Hubbegrenzungseinrichtung gleichzeitig auch eine Verliersicherung für das an der Abdeckeinrichtung angeordnete zweite Teil der Blockiereinrichtung darstellt, ist auch unter rauen Umgebungsbedingungen gewährleistet, dass das zweite Teil nicht verlorengeht und darüber hinaus auch nicht mutwillig durch hierzu nicht autorisierte Personen entfernt wird.

Bei einer Ausführungsform des erfindungsgemäßen Tränktrogs ist die Hubbegrenzungseinrichtung einerseits durch das auf der Außenseite der Abdeckeinrichtung angeordnete Betätigungsorgan des Eingreifkörpers, welches einen größeren Querschnitt als die Durchgangsöffnung der Abdeckeinrichtung aufweist, und andererseits durch eine von dem Betätigungsorgan beabstandet und auf der Innenseite der Abdeckeinrichtung an dem Eingreifkörper angeordnetes Sperrorgan, welches ein Herausfahren des Eingreifkörpers nur bis zur Anlage des Sperrorgans an die Innenseite der Abdeckeinrichtung zulässt, gebildet. Dergestalt übernimmt das Betätigungsorgan neben seiner Funktion zum Betätigen des Eingreifkörpers die weitere Funktion, einen Teil der Hubbegrenzungseinrichtung zu bilden. Es sind jedoch auch alternative Lösungen realisierbar, bei denen auf der Außenseite der Abdeckeinrichtung an dem Eingreifkörper und getrennt von dem Betätigungsorgan ein Bestandteil der Hubbegrenzungseinrichtung vorgesehen ist, welches über die Querschnittsfläche der benachbarten Bereiche des Eingreifkörpers hinaussteht und dergestalt die Durchgangsöffnung der Abdeckeinrichtung oder eine hier gegebenenfalls vorgesehene Führung in Form eines zylindrischen Hohlkörpers aufgrund Ihrer Ausdehnung nicht passieren kann. Das auf der Innenseite der Abdeckeinrichtung an dem Eingreifkörper angeordnete Sperrorgan ragt quer zur Längserstreckung des Eingreifkörpers derart über dessen Querschnittsfläche hinaus, so dass das Sperrorgan die Durchgangsöffnung der Abdeckeinrichtung oder einen gegebenenfalls auf der Innenseite der Abdeckeinrichtung angeordneten zylindrischen Hohlkörper zur Führung des Eingreifkörpers nicht passieren kann.

Bei einer Ausführungsform des erfindungsgemäßen Tränktrogs ist der erste Teil der Blockiereinrichtung in Form eines Winkeleisens ausgeführt, das die Ausnehmung in einem seiner Schenkel aufweist, wobei die Ausnehmung in ihrer Tiefenerstreckung im montierten Zustand und in geschlossener Position der Abdeckeinrichtung in Richtung der Längserstreckung des Eingreifkörpers ausgerichtet ist. Die Verwendung eines Winkeleisens für das erste Teil der Blockiereinrichtung stellt eine kostengünstige Variante für dessen Realisierung dar. Selbstverständlich sind hier auch andere Lösungen, beispielsweise abweichend von der Winkelform einen U-förmigem, T-förmigem oder kreisförmigen Querschnitt für das erste Teil zu verwenden. Als Material für das erste Teil der Blockiereinrichtung kommen neben Metallen selbstverständlich auch Kunststoffe oder andere Materialien in Frage. Die Tiefenerstreckung der Ausnehmung im ersten Teil ist so zu wählen, dass in der geschlossenen Position der Abdeckeinrichtung der Eingreifkörper zumindest so weit in die Ausnehmung eingreifen kann, dass er bei dem Versuch, die Abdeckeinrichtung durch eine Schwenkbewegung derselben zu öffnen, durch das damit einhergehende Verschwenken des Eingreifkörpers selbst so in Anlage an einen Randbereich der Ausnehmung kommt, dass eine über die hierzu erforderliche Bewegung hinausgehende Schwenkbewegung der Abdeckeinrichtung wirksam verhindert ist. Die Ausrichtung der Tiefenerstreckung der Ausnehmung in Richtung der Längserstreckung des Eingreifkörpers bei geschlossener Position der Abdeckeinrichtung ist für ein einfaches Ein- und Ausfahren des Eingreifkörpers in und aus der Ausnehmung vorteilhaft.

Bei einer Ausführungsform des erfindungsgemäßen Tränktrogs ist der Eingreifkörper durch einen Abschnitt des Schraubenschafts einer Schraube gebildet. Die Verwendung eines handelsüblichen Bauteils wie dem Schraubenschaft einer Schraube für den Eingreifkörper ist kostengünstig und aufgrund der existierenden Vielfalt an Schrauben, insbesondere bezüglich der Abmessung, dem Material und der Ausgestaltung kann trotz der Verwendung eines handelsüblichen Bauteils ein den jeweiligen Anforderungen gerecht werdender Eingreifkörper ausgewählt werden. Aufgrund der durch Normen festgelegten Abmessungen von Schrauben ist auch eine einfache Dimensionierung der mit dem Eingreifkörper kooperierenden Teile ermöglicht. Ein mit der Schraube bereits einstückig verbundener Schraubenkopf bietet eine einfache und ohne weiteren Fertigungsaufwand zur Verfügung stehende Lösung für das Betätigungsorgan des Eingreifkörpers.

Bei einer Ausführungsform des erfindungsgemäßen Tränktrogs ist das Sperrorgan durch eine auf den Eingreifkörper aufgebrachte Schraubenmutter gebildet. Als handelsübliches Bauteil stellt eine Schraubenmutter eine kostengünstige Lösung für das Sperrorgan dar, die darüber hinaus noch den Vorteil bietet, dass sie in einfacher Weise an verschiedenen Positionen des Eingreifkörpers anordenbar. Bei einer Ausführungsform des erfindungsgemäβen Tränktrogs ist der Eingreifkörper zumindest abschnittsweise als Schrau-benschaft ausgeführt und so auch eine einfache Veränderung der Schranke für die Hubbewegung des Eingreifkörpers ermöglicht, je nach Position der Schraubenmutter längs des Eingreifkörpers. Bei einer Ausführungsform des erfindungsgemäßen Tränktrogs ist für die Schraubenmutter eine solche vorgesehen, die Mittel zum Verhindern eines selbständigen Lösens der Schraubenmutter aufweist, so dass hier eine über lange Zeit stabile Position der Schraube bezüglich des Schraubenschafts gewährbar ist.

Bei einer Ausführungsform des erfindungsgemäßen Tränktrogs übergreift die Abdeckeinrichtung in ihrer geschlossenen Position die zu schützenden Behälterkomponenten in der Art einer Haube und deckt sie dergestalt ab. Die zu schützenden Behälterkomponenten, die am Boden oder an den Wänden des wasseraufnehmenden Behälters des Tränktrogs angeordnet sind, sind in der Aufstelllage des erfindungsgemäßen Tränktrogs nach unten hin durch den Boden des Behälters gegen die Umgebung abgedeckt und je nach Ausführung des Behälters sowie Anordnung der zu schützenden Behälterkomponenten auch zu den Seiten hin zumindest teilweise durch Seitenwände des Behälters abgedeckt. Insbesondere nach oben sowie zu den seitlichen Bereichen hin, die nicht bereits durch Wände des Behälters abgedeckt sind, werden die zu schützenden Behälterkomponenten durch die Abdeckeinrichtung in deren geschlossener Position haubenartig übergriffen, so dass in Zusammenwirken mit dem Boden und Seitenwänden eine nahezu vollständige Abdeckung der zu schützenden Behälterkomponenten gegen die Außenwelt realisiert ist. Insbesondere sofern die Abdeckeinrichtung zum Schutz einer Wassereinlaufeinrichtung vorgesehen ist, ist jedoch zur Gewährleistung des Wassereinlaufs in den Behälter eine geringe Beabstandung der Abdeckeinrichtung im geschlossenen Zustand vom Boden bzw. den Seitenwänden des Behälters notwendig, so dass hier der Zufluss von Wasser aus der ansonsten abgedeckten Wassereinlaufeinrichtung in den Behälter ermöglicht ist. Die dahingehenden Beabstandungen sind jedoch so gering, dass durch sie hindurch keine Beschädigung der zu schützenden Behälterkomponenten erfolgen kann.

Bei einer Ausführungsform des erfindungsgemäßen Tränktrogs ist die Abdeckeinrichtung durch eine Schwenkeinrichtung, insbesondere durch eine scharnierartige Schwenkeinrichtung, mit einer Seitenwand des Behälters und gegenüber dem Behälter schwenkbar verbunden. Eine scharnierartige Schwenkeinrichtung kann beispielsweise durch ein handelsübliches Scharnier gebildet sein, bei dem ein feststehender Teil an einer Seitenwand des Behälters angebracht und ein gegenüber dem feststehenden Teil beweglicher Teil an der Abdeckeinrichtung angebracht ist. Insbesondere sofern die Abdeckeinrichtung aus einem Kunststoffmaterial gebildet ist, sind jedoch auch andere Lösungen denkbar. So kann die Abdeckeinrichtung beispielsweise in Richtung der mit ihr zu verbindenden Seitenwand eine Lasche ausprägen, die fest mit der Seitenwand verbunden ist, jedoch längs einer vorgesehenen Schwenkachse eine Materialausdünnung aufweist, so dass ein Verschwenken der Abdeckhaube gegenüber der Seitenwand unter Verformung des ausgedünnten Bereichs der Lasche ermöglicht ist. Bei einer Ausführungsform des erfindungsgemäßen Tränktrogs ist insbesondere an der Seitenwand, an der eine Verbindung mit der Abdeckeinrichtung vorgesehen ist, diese Seitenwand in der vorgesehenen Aufstelllage des Tränktrogs nach oben hin gegenüber den übrigen Seitenwänden des Behälters des Tränktrogs weiter ausgedehnt. Hierdurch können in dem durch die Abdeckhaube zu schützenden Bereich auch groß aufbauende Behälterkomponenten vorgesehen werden, die durch eine angepasste Abdeckeinrichtung in deren geschlossener Position wirksam geschützt sind. Die erwähnte Wassereinlaufeinrichtung stellt nur eine mögliche zu schützende Behälterkomponente dar. Für eine weitere zu schützende Behälterkomponente bietet sich beispielsweise die bei vielen Trögen vorgesehene Begrenzungseinrichtung zur Begrenzung des Maximalpegels des Wasserstands an, die häufig in Form eines zylindrischen Hohlkörpers und senkrecht zum Boden des Behälters des Tränktrogs angeordnet ist.

Nachstehend ist die Erfindung anhand eines in der Zeichnung dargestellten Ausführungsbeispiels im Einzelnen erläutert. Es zeigen:
- Fig. 1: eine perspektivische Teilansicht eines erfindungsgemäßen Tränktrogs,
- Fig. 2: eine schematische, nicht maßstäbliche und teilweise im Schnitt dargestellte Seitenansicht eines Teils eines erfindungsgemäßen Tränktrogs,
- Fig. 3: eine weitere schematische, nicht maßstäbliche und teilweise im Schnitt dargestellte Seitenansicht eines Teils eines erfindungsgemä- ßen Tränktrogs, und
- Fig. 4: eine weitere schematische, nicht maßstäbliche Seitenansicht eines Teils eines erfindungsgemäßen Tränktrogs.

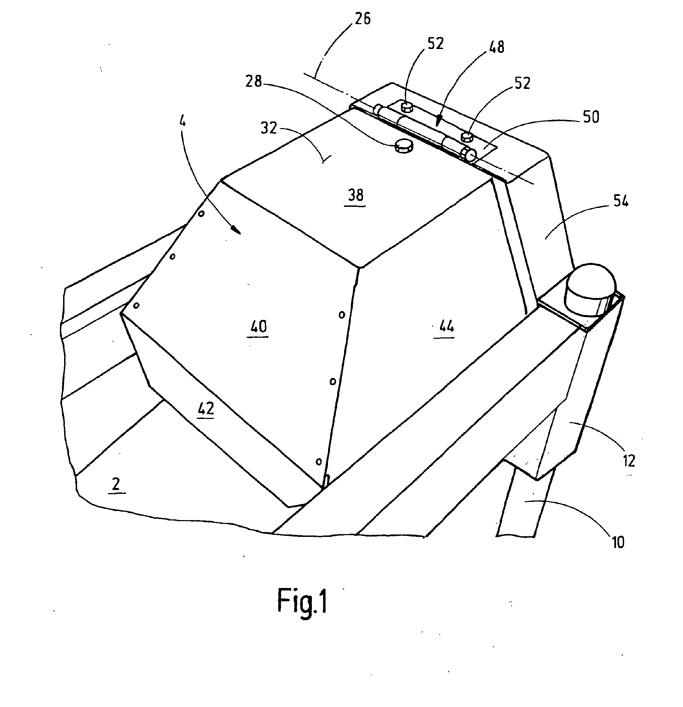

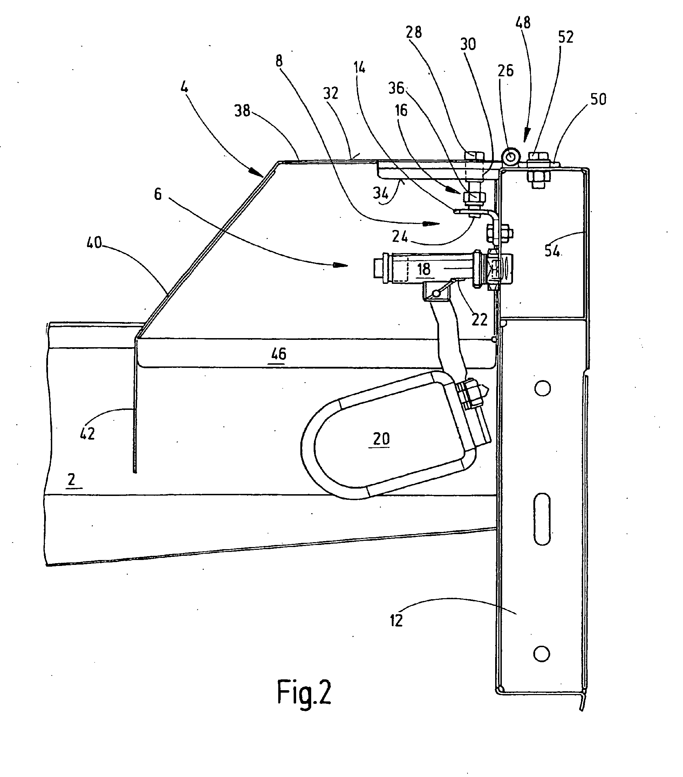

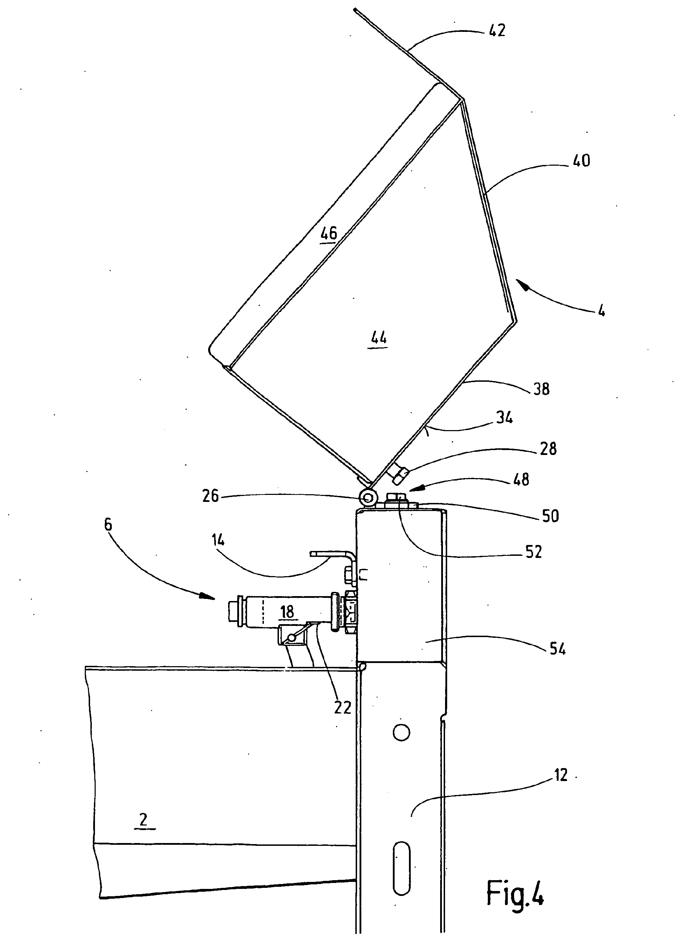

Der in der Fig. 1 teilweise dargestellte erfindungsgemäße Tränktrog weist einen wasseraufnehmenden Behälter 2 sowie zu schützende Behälterkomponenten, wie eine Wassereinlaufeinrichtung 6 (siehe Fig. 2) und eine Abdeckeinrichtung 4 auf. Die Abdeckeinrichtung 4 ist durch eine Schwenkbewegung in Bezug auf den Behälter 2 zwischen einer geöffneten (siehe Fig. 4) und einer geschlossenen (siehe Fig. 1 bis Fig. 3) Position bewegbar. In der geschlossenen Position der Abdeckeinrichtung 4 sind die zu schützenden Behälterkomponenten nach außen hin durch die Abdeckeinrichtung 4 abgedeckt, und eine Bewegung der Abdeckeinrichtung 4 ist mittels einer Blockiereinrichtung 8 (siehe Fig. 2) verhinderbar. Auch die Blockiereinrichtung 8 ist in der geschlossenen Position der Abdeckeinrichtung 4 zumindest teilweise durch die Abdeckeinrichtung 4 abgedeckt.

Der erfindungsgemäße Tränktrog kann in üblicher Weise auf einem Stallboden oder eine Viehweide aufgestellt werden, beispielsweise wie in Fig. 1 angedeutet, unter Verwendung von senkrecht stehenden runden Pfosten 10, von denen bei der Darstellung in der Fig. 1 lediglich ein Pfosten 10 sichtbar ist. Sofern die Verbindung zwischen dem Pfosten 10 und dem Behälter 2 des Tränktrogs über eine geeignete Verbindungseinrichtung 12 vorgenommen ist, erlaubt diese durch die klemmende Anlage von Schrauben (nicht dargestellt) an den Pfosten 10 gegebenenfalls auch eine Höhenverstellung des Behälters 2 des Tränktrogs gegenüber dem jeweiligen Aufstellboden, so dass die Höhe des Behälters 2 des Tränktrogs der Größe der zu versorgenden Tiere eines Viehbestands angepasst werden kann. Dem Behälter 2 des Tränktrogs wird über die in der Fig. 1 durch die Abdeckeinrichtung 4 abgedeckte Wassereinlaufeinrichtung 6 (siehe Fig. 2) frisches Wasser zugeführt, das anschließend zur Versorgung der Tiere zur Verfügung steht.

Die Fig. 2 erlaubt durch die teilweise im Schnitt dargestellte Seitenansicht einen Blick in Teile des Tränktrogs, die von der geschlossenen Abdeckeinrichtung 4 abgedeckt sind. Die Blockiereinrichtung 8 weist einen ersten am Behälter 2 feststehend angeordneten Teil 14 sowie einen zweiten mit dem ersten Teil 14 kooperierenden und gegenüber diesem in seiner Lage veränderlichen Teil 16 auf, welcher an der Abdeckeinrichtung 4 beweglich angeordnet ist.

Die durch die Abdeckeinrichtung 4 abgedeckte Wassereinlaufrichtung 6 weist in üblicher Weise ein Einlaufventil 18 auf, das über ein geeignetes Gestänge mit einem Schwimmkörper 20 zusammenwirkt, so dass ein Absenken des Schwimmkörpers 20 entsprechend einem sinkenden Wasserstand im Behälter 2 zu einer Wasserzufuhr mittels der Wassereinlaufeinrichtung 6 in den Behälter 2 führt. Hierzu kann vorgesehen sein, dass ein Schieber 22 eine Öffnung (nicht gezeigt) an dem Einlaufventil 18 in Abhän-gigkeit von der Lage des Schwimmkörpers 20 entweder freigibt oder verschließt.

Der erste Teil 14 der Blockiereinrichtung 8 weist eine Ausnehmung auf, in die in der in Fig. 2 gezeigten geschlossenen Position der Abdeckeinrichtung 4 ein korrespondierender Eingreifkörper 24 des zweiten Teils 16 in Eingriff gebracht ist, wodurch eine Bewegung der Abdeckeinrichtung 4 aus der in der Fig. 2 dargestellten geschlossenen Position in die geöffnete Position verhindert ist.

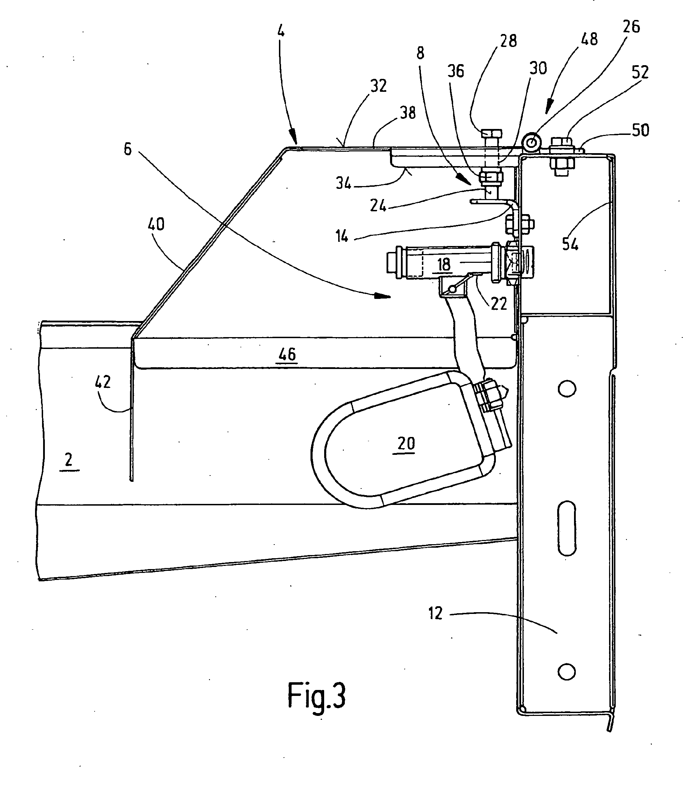

Die Fig. 3 zeigt eine zur Fig. 2 ähnliche Darstellung, jedoch ist hier die Lage des Eingreifkörpers 24 der Blockiereinrichtung 8 durch eine Hubbewegung in Richtung der Längserstreckung des Eingreifkörpers 24 gegenüber der Darstellung in der Fig. 2 verändert. In der in der Fig. 2 dargestellten geschlossenen Position der Abdeckeinrichtung befindet sich der Eingreifkörper 24 im Eingriff in die im ersten Teil 14 der Blockiereinrichtung 8 ausgebildeten Ausnehmung, während bei der Darstellung nach Fig. 3 der Eingreifkörper 24 zum Deblockieren der Blockiereinrichtung mit Blick auf Fig. 3 nach oben aus der Ausnehmung herausgefahren ist und so eine Schwenkbewegung der Abdeckeinrichtung 4 in Bezug auf den Behälter 2 um eine Schwenkachse 26 (vgl. Fig. 3 und Fig. 4) ermöglicht ist.

Der Eingreifkörper 24 weist ein Betätigungsorgan 28 zur Veränderung der Lage des Eingreifkörpers 24 auf und das Betätigungsorgan 28 ist sowohl in der offenen (siehe Fig. 4) als auch in der geschlossenen (siehe Fig. 1 bis 3) Stellung der Abdeckeinrichtung 4 von außen zugänglich. Mit Hilfe des Betätigungsorgans 28 ist eine werkzeuglose Betätigung der Blockiereinrichtung 8 ermöglicht.

Der Eingreifkörper 24 durchgreift eine korrespondierende Durchgangsöffnung (30) in der Abdeckeinrichtung mit Spiel, so dass ein hemmnisarmes Bewegen des Eingreifkörpers 24 relativ zur Abdeckeinrichtung 4 gewährleistet ist.

Der Eingreifkörper 24 ist in seiner Bewegbarkeit bezüglich der Abdeckeinrichtung 4 durch eine Hubbegrenzungseinrichtung eingeschränkt. Durch die Hubbegrenzungseinrichtung ist der Eingreifkörper 24 darüber hinaus auch verliersicher an der Abdeckeinrichtung 4 gelagert. So ist die Hubbegrenzungseinrichtung einerseits durch das auf der Außenseite 32 der Abdeckeinrichtung 4 angeordnete Betätigungsorgan 28 des Eingreifkörpers 24, welches einen größeren Querschnitt als die Durchgangsöffnung 30 der Abdeckeinrichtung 4 aufweist, und andererseits durch ein von dem Betätigungsorgan 28 beabstandete und auf der Innenseite 34 der Abdeckeinrichturig 4 an dem Eingreifkörper 24 angeordnetes Sperrorgan 36, welches ein Herausfahren des Eingreifkörpers 24 nur bis zur Anlage des Sperrorgans 36 an die Innenseite 34 der Abdeckeinrichtung 4 zuläßt, gebildet.

Der erste Teil 14 der Blockiereinrichtung ist bei der gezeigten Ausführungsform des erfindungsgemäßen Tränktrogs in Form eines Winkeleisens ausgeführt, welches die Ausnehmung für den möglichen Eingriff des Eingreifkörpers 24 in einem seiner Schenkel aufweist. Die Tiefenerstreckung der Ausnehmung ist im montierten Zustand und in geschlossener Position der Abdeckeinrichtung 4 in Richtung der Längserstreckung des Eingreifkörpers 24 ausgerichtet. Dergestalt ist ein hemmnisarmes Herein- und Herausfahren des Eingreifkörpers 24 in die und aus der Ausnehmung des Winkeleisens in der geschlossenen Position der Abdeckeinrichtung 4 gewährleistet. Bei der gezeigten Ausführungsform eines erfindungsgemäßen Tränktrogs ist der Eingreifkörper 24 durch einen Abschnitt des Schraubenschafts einer Schraube gebildet. Das Betätigungsorgan 28 ist durch den Schraubenkopf der Schraube gebildet. Gemäß den Darstellungen in Fig.1 bis 4 handelt es sich bei dem Schraubenkopf um einen Sechskant-Schraubenkopf. Selbstverständlich sind hier auch andere Schraubenkopfformen, insbesondere solche, die eine einfache und nur mit geringem Verletzungsrisiko behaftete Handhabung des Betätigungsorgans 28 zulassen, einsetzbar. Insbesondere könnte anstatt eines sechskantförmigen Schraubenkopfes ein solcher mit kreiszylindrischer Außenfläche des Kopfes zum Einsatz gelangen.

Wie aus den Fig. 2 und 3 hervorgeht, sind neben der Wassereinlaufeinrichtung 6 als Beispiel für eine zu schützende Behälterkomponente in der geschlossenen Position der Abdeckeinrichtung 4 auch alle Teile der Blockiereinrichtung 8, außer dem Betätigungsorgan 28, durch die Abdeckeinrichtung 4 abgedeckt. Hierdurch ist zum einen das Verletzungsrisiko für Tiere des Viehbestands minimiert, zum anderen aber auch ein Schutz der Blokkiereinrichtung 8 gegen eine mutwillige Beschädigung nicht autorisierter Personen gegeben. Das Sperrorgan 36, welches an dem Eingreifkörper 24 angeordnet ist, ist bei der gezeigten Ausführungsform durch eine Schraubenmutter gebildet, welche sich in einfacher Weise auf den durch einen Schraubenschaft gebildeten Eingreifkörper 24 aufbringen läßt. Für die Schraubenmutter 36 ist bevorzugt eine Ausführung ausgewählt, die nach deren Aufbringen auf den Eingreifkörper 24 durch eine entsprechende Hemmeinrichtung gegen ein selbständiges Lösen geschützt ist. Sofern eine Standard-Schraubenmutter zum Einsatz für das Sperrorgan 36 kommt, läßt sich diese in ihrer gewünschten Position am Eingreifkörper 24 auch beispielsweise mittels Schraubensicherungslack oder einem geeigneten Klebstoff festlegen.

Die Abdeckeinrichtung 4 weist, wie aus den Fig.1 bis 4 zu ersehen, eine Haube auf, welche aus mehreren Flächenteilen, von denen in den Figuren nur die Flächenteile 38,40,42,44 und 46 dargestellt sind, gebildet ist. Dergestalt übergreift die Abdeckeinrichtung 4 in ihrer geschlossenen Position die zu schützenden Behälterkomponenten, wie beispielsweise die Wassereinlaufeinrichtung 6, in Form einer Haube und deckt diese ab.

Die Abdeckeinrichtung 4 ist durch eine Schwenkbewegung in Bezug auf den Behälter 2 zwischen einer geöffneten und einer geschlossenen Position bewegbar und weist hierzu eine scharnierartige Schwenkeinrichtung 48 auf, die eine Schwenkbewegung der Abdeckeinrichtung 4 gegenüber dem Behälter 2 um eine Schwenkachse 26 ermöglicht. Bei der in den Figuren gezeigten Ausführungsform des Tränktrogs ist die Schwenkeinrichtung 48 durch ein Scharnier gebildet, dessen feststehender Teil durch eine Befestigungslasche 15, welche von Befestigungsschrauben 52 durchgriffen ist, an einem Seitenteil 54 des Tränktrogs festgelegt ist.

Wie ein Vergleich der Fig. 3 und 4 nahelegt, können hierbei die Schraubenköpfe der Befestigungsschrauben 52 auch als ein Anschlagmittel zur Begrenzung der Schwenkbewegung der Abdeckeinrichtung 4 dienen, indem ein Verschwenken zum Öffnen der Abdeckeinrichtung 4 nur bis zur Anlage des Flächenteils 38 der Abdeckeinrichtung 4 an einen Schraubenkopf der Befestigungsschraube 50 möglich ist.

Die die Haube der Abdeckeinrichtung bildenden Flächenteile, von denen nur die Flächenteile 38,40,42,44 und 46 dargestellt sind, lassen sich selbstverständlich den gegebenen Größenverhältnissen eines zu realisierenden Tränktrogs anpassen. So lassen sich durch die geeignete Dimensionierung der Abdeckeinrichtung 4 auch groß aufbauende zu schützende Behälterkomponenten von der Abdeckeinrichtung schützen.

## Patentansprüche

1. Tränktrog umfassend:
- einen wasseraufnehmenden Behälter (2),
- zu schützende Behälterkomponenten, wie eine Wassereinlaufeinrichtung (6),
- eine Abdeckeinrichtung (4), die zwischen einer geöffneten und einer geschlossenen, die zu schützenden Behälterkomponenten nach außen abdeckenden, Position bewegbar ist, und
- eine Blockiereinrichtung (8), die in der geschlossenen Position eine Bewegung der Abdeckeinrichtung (4) verhindert und dabei zumindest teilweise durch die Abdeckeinrichtung (4) abgedeckt ist,
- wobei die Blockiereinrichtung (8) mindestens einen ersten am Behälter (2) feststehend angeordneten Teil (14) sowie einen zweiten mit dem ersten Teil (14) kooperierenden und gegenüber diesem in seiner Lage veränderlichen Teil (16), welcher an der Abdeckeinrichtung (4) beweglich angeordnet ist, aufweist,
- wobei der erste Teil (14) eine Ausnehmung aufweist, in die in der geschlossenen Position der Abdeckeinrichtung (4) ein korrespondierender Eingreifkörper (24) des zweiten Teils (16) derart in Eingriff bringbar ist, dass eine Bewegung der Abdeckeinrichtung (4) in die geöffnete Position verhindert ist,
- **dadurch gekennzeichnet, dass** die Abdeckeinrichtung (4) durch eine Schwenkbewegung in Bezug auf den Behälter (2) zwischen geöffneter und geschlossener Position bewegbar ist,
- dass der Eingreifkörper (24) ein Betätigungsorgan (28) zur Veränderung der Lage des Eingreifkörpers (24) aufweist, das sowohl in der offenen als auch in der geschlossenen Position der Abdeckeinrichtung (4) von außen zugänglich eine werkzeuglose Betätigung der Blockiereinrichtung (8) ermöglicht, und
- dass in der geschlossenen Position alle Teile der Blockiereinrichtung (8), außer das Betätigungsorgan (28), durch die Abdeckeinrichtung (4) abgedeckt sind.

2. Tränktrog nach Anspruch 1, **dadurch gekennzeichnet, dass** der Eingreifkörper (24) der Blockiereinrichtung (8) durch eine Hubbewegung in Richtung seiner Längserstreckung in seiner Lage veränderlich ist, und dass in der geschlossenen Position der Abdeckeinrichtung (4) der Eingreifkörper (24) zum Eingreifen in die Ausnehmung verfahrbar ist und zum Deblockieren der Blockiereinrichtung (8) in die entgegengesetzte Richtung aus der Ausnehmung herausfahrbar ist.

3. Tränktrog nach einem der vorhergehenden Ansprüche, **dadurch gekennzeichnet, dass** der Eingreifkörper (24) eine korrespondierende Durchgangsöffnung (30) in der Abdeckeinrichtung (4) mit Spiel durchgreift, so dass ein hemmnisarmes Bewegen des Eingreifkörpers (24) relativ zur Abdeckeinrichtung (4) gewährleistet ist.

4. Tränktrog nach einem der vorhergehendenAnsprüche, **dadurch gekennzeichnet, dass** der Eingreifkörper (24) in seiner Bewegbarkeit bezüglich der Abdeckeinrichtung (4) durch eine Hubbegrenzungseinrichtung eingeschränkt und durch diese auch verliersicher an der Abdeckeinrichtung (4) gelagert ist.

5. Tränktrog nach Anspruch 4, **dadurch gekennzeichnet, dass** die Hubbegrenzungseinrichtung einerseits durch das auf der Außenseite (32) der Abdeckeinrichtung (4) angeordnete Betätigungsorgan (28) des Eingreifkörpers (24), welches einen größeren Querschnitt als die Durchgangsöffnung (30) der Abdeckeinrichtung (4) aufweist, und andererseits durch ein von dem Betätigungsorgan (28) beabstandet und auf der Innenseite (34) der Abdeckeinrichtung (4) an dem Eingreifkörper (24) angeordnetes Sperrorgan (36), welches ein Herausfahren des Eingreifkörpers (24) nur bis zur Anlage des Sperrorgans (36) an der Innenseite (34) der Abdeckeinrichtung (4) zulässt, gebildet ist.

6. Tränktrog nach Anspruch 5, **dadurch gekennzeichnet, dass** das Sperrorgan (36) durch eine auf den Eingreifkörper (24) aufgebrachte Schraubenmutter gebildet ist.

7. Tränktrog nach einem der vorhergehenden Ansprüche, **dadurch gekennzeichnet, dass** der Eingreifkörper (24) durch einen Abschnitt des Schraubenschafts einer Schraube gebildet ist.

8. Tränktrog nach Anspruch 7, **dadurch gekennzeichnet, dass** das Betätigungsorgan (28) durch den Kopf der Schraube gebildet ist.

9. Tränktrog nach einem der vorhergehenden Ansprüche, **dadurch gekennzeichnet, dass** der erste Teil (14) der Blockiereinrichtung (8) in Form eines Winkeleisens ausgeführt die Ausnehmung in einem seiner Schenkel aufweist, wobei die Ausnehmung in ihrer Tiefenerstreckung im montierten Zustand und in geschlossener Position der Abdeckeinrichtung (4) in Richtung der Längserstreckung des Eingreifkörpers (24) ausgerichtet ist.

10. Tränktrog nach einem der vorhergehenden Ansprüche, **dadurch gekennzeichnet, dass** die Abdeckeinrichtung (4) in ihrer geschlossenen Position die zu schützenden Behälterkomponenten in der Art einer Haube übergreift und dergestalt abdeckt.

11. Tränktrog nach einem der vorhergehenden Ansprüche, **dadurch gekennzeichnet, dass** die Abdeckeinrichtung (4) durch eine Schwenkeinrichtung (48) mit einer Seitenwand des Behälters (2) und gegenüber dem Behälter (2) schwenkbar verbunden ist.

12. Tränktrog nach Anspruch 11, **dadurch gekennzeichnet, dass** die Schwenkeinrichtung (48) scharnierartig ausgebildet ist.

## Claims

1. A watering trough comprising:
- a water-receiving container (2),
- container components to be protected, such as a water intake device (6),
- a covering device (4) which can be moved between an open and a closed position covering the container components to be protected to the outside, and
- a blocking device (8) which, in the closed position, prevents any movement of the covering device (4)) and is thereby covered at least partially by the covering device (4),
- the blocking device (8) having at least one first part (14) disposed, fixed, on the container (2) and a second part (16) cooperating with the first part (14) and with a changeable position with respect to the latter and which is disposed moveably on the covering device (4),
- the first part (14) having a recess in which, in the closed position of the covering device (4), a corresponding engaging body (24) of the second part (16) can be engaged such that movement of the covering device (4) into the open position is prevented.
- **characterised in that** the covering device (4) can be moved between an open and a closed position by a swivel movement in relation to the container (2),
- that the engaging body (24) has an actuating component (28) for changing the position of the engaging body (24) that enables tool-free actuation of the blocking device (8) both in the open and in the closed position of the covering device (4) accessible from the outside, and
- that in the closed position all of the parts of the blocking device (8) apart from the actuating component (28) are covered by the covering device (4).

2. The watering trough according to Claim 1, **characterised in that** the position of the engaging body (24) of the blocking device (8) can be changed by a lifting movement in the direction of its longitudinal extension, and that in the closed position of the covering device (4) the engaging body (24) can be moved to engage in the recess and can be moved out of the recess in the opposite direction in order to deblock the blocking device (8).

3. The watering trough according to any of the preceding claims, **characterised in that** the engaging body (24) passes through a corresponding through opening (30) in the covering device (4) with play so that a low-restraint movement of the engaging body (24) relative to the covering device (4) is guaranteed.

4. The watering trough according to any of the preceding claims, **characterised in that** the the moveability of the engaging body (24) in relation to the covering device (24) is restricted by a lift limitation device and said engaging body is also mounted securely on the covering device (4) by means of the latter.

5. The watering trough according to Claim 4, **characterised in that** the lift limitation device is on the one hand formed by the actuating component (28) of the engaging body (24) disposed on the outside of the covering device (4) and which has a larger cross-section than the through opening (30) of the covering device (4), and on the other hand is formed by a blocking component (36) spaced apart from the actuating component (28) and disposed on the inside (34) of the covering device (4) on the engaging body (24) and which allows the engaging body (24) to be moved out only until the blocking component (36) comes to rest against the inside (34) of the covering device (4).

6. The watering trough according to Claim 5, **characterised in that** the blocking component (36) is formed by a nut applied to the engaging body (24).

7. The watering trough according to any of the preceding claims, **characterised in that** the engaging body (24) is formed by a section of the shaft of a screw.

8. The watering trough according to Claim 7, **characterised in that** the actuating component (28) is formed by the head of the screw.

9. The watering trough according to any of the preceding claims, **characterised in that** the first part (14) of the blocking device (8) made in the form of an angle iron has the recess in one of its side pieces, the depth extension of the recess in the fitted state and in the closed position of the covering device (4) being aligned in the direction of the longitudinal extension of the engaging body (24).

10. The watering trough according to any of the preceding claims, **characterised in that** in its closed position the covering device (4) overlaps the container components to be protected in the manner of a hood and thus covers them.

11. The watering trough according to any of the preceding claims, **characterised in that** the covering device (4) is pivotably connected by a swivel device (48) to a side wall of the container (2) and with respect to the container (2).

12. The watering trough according to Claim 11, **characterised in that** the swivel device (48) is made like a hinge.

## Revendications

1. Abreuvoir comprenant
- une cuve (2) d'eau,
- des composants de cuve à protéger, comme un dispositif (6) d'entrée d'eau,
- un dispositif (4) de couverture, qui est mobile entre une position ouverte et une position fermée recouvrant vers l'extérieur les composants de cuve à protéger, et
- un dispositif (8) de blocage, qui empêche dans la position fermée un déplacement du dispositif (4) de couverture et est recouvert ce faisant, au moins en partie, par le dispositif (4) de couverture,
- dans lequel le dispositif (8) de blocage a au moins une première partie (14) montée fixe sur la cuve (2), ainsi qu'une deuxième partie (16), qui coopère avec la première partie (14), dont la position peut se modifier par rapport à celle-ci et qui est montée mobile sur le dispositif (4) de couverture,
- dans lequel la première partie (14) a un évidement, dans lequel, dans la position fermée du dispositif (4) de couverture, une pièce (24) correspondante de pénétration de la deuxième partie (16) peut être mise en prise, de manière à empêcher le dispositif (4) de couverture de venir dans la position ouverte,
- **caractérisé en ce que** le dispositif (4) de couverture est mobile entre une position ouverte et une position fermée par un pivotement par rapport à la cuve (2),
- **en ce que** la pièce (24) de pénétration a un organe (28) d'actionnement pour modifier la position de la pièce (24) de pénétration, qui rend possible, tant dans la position ouverte qu'également dans la position fermée du dispositif (4) de couverture en étant accessible de l'extérieur, un actionnement sans outil du dispositif (8) de blocage, et
- **en ce que**, dans la position fermée, toutes les parties du dispositif (8) de blocage, à l'exception de l'organe (28) d'actionnement, sont recouvertes par le dispositif (4) de couverture.

2. Abreuvoir suivant la revendication 1, **caractérisé en ce que** la position de la pièce (24) de pénétration du dispositif (8) de blocage se modifie par une course dans la direction de son étendue longitudinale et **en ce que**, dans la position fermée du dispositif (4) de couverture, la pièce (24) de pénétration peut être déplacée pour pénétrer dans l'évidement et, pour le déblocage du dispositif (8) de blocage, peut être sortie de l'évidement dans le sens contraire.

3. Abreuvoir suivant l'une des revendications précédentes, **caractérisé en ce que** la pièce (24) de pénétration passe avec jeu dans une ouverture (30) traversante correspondante du dispositif (4) de couverture, de manière à assurer un déplacement avec peu d'obstacles de la pièce (24) de pénétration par rapport au dispositif (4) de couverture.

4. Abreuvoir suivant l'une des revendications précédentes, **caractérisé en ce que** la pièce (24) de pénétration est limitée dans sa possibilité de déplacement par rapport au dispositif (4) de couverture par un dispositif de limitation de course et est montée par ce dernier et également sans possibilité de se perdre sur le dispositif (4) de couverture.

5. Abreuvoir suivant la revendication 4, **caractérisé en ce que** le dispositif de limitation de course est formé, d'une part, par l'organe (28) d'actionnement de la pièce (24) de pénétration monté du côté (32) extérieur du dispositif (4) de couverture et ayant une section transversale plus grande que l'ouverture (30) traversante du dispositif (4) de couverture et, d'autre part, par un organe (36) d'arrêt à distance de l'organe (28) d'actionnement, monté du côté (34) intérieur du dispositif (4) de couverture sur la pièce (24) de pénétration, organe (36) d'arrêt qui n'autorise la pièce (24) de pénétration à sortir que jusqu'à ce que l'organe (36) d'arrêt s'applique au côté (34) intérieur du dispositif (4) de couverture.

6. Abreuvoir suivant la revendication 5, **caractérisé en ce que** l'organe (36) d'arrêt est formé par un écrou mis sur la pièce (24) de pénétration.

7. Abreuvoir suivant l'une des revendications précédentes, **caractérisé en ce que** la pièce (24) de pénétration est formée par un tronçon du fût d'une vis.

8. Abreuvoir suivant la revendication 7, **caractérisé en ce que** l'organe (28) d'actionnement est formé par la tête de la vis.

9. Abreuvoir suivant l'une des revendications précédentes, **caractérisé en ce que** la première partie (14) du dispositif (8) de blocage réalisée sous la forme d'un fer d'équerre a l'évidement dans l'une de ses branches, l'évidement étant dirigé dans son étendue en profondeur à l'état monté et dans la position fermée du dispositif (4) de couverture dans la direction de l'étendue longitudinale de la pièce (24) de pénétration.

10. Abreuvoir suivant l'une des revendications précédentes, **caractérisé en ce que** le dispositif (4) de couverture empiète dans sa position fermée sur les composants de cuve à protéger à la manière d'une hotte et ainsi les recouvre.

11. Abreuvoir suivant l'une des revendications précédentes, **caractérisé en ce que** le dispositif (4) de couverture est relié de manière à pouvoir pivoter par rapport à la cuve (2) par un dispositif (48) de pivotement à une paroi latérale de la cuve (2).

12. Abreuvoir suivant la revendication 11, **caractérisé en ce que** le dispositif (48) de pivotement est du type à charnière.
